Europäisches Patentamt

European Patent Office

Office européen des brevets

(11) Publication number: **0 025 336**
**B1**

(12) **EUROPEAN PATENT SPECIFICATION**

(45) Date of publication of patent specification: 24.04.85

(51) Int. Cl.⁴: **G 01 L 9/12, G 01 L 9/00**

(21) Application number: 80303059.2

(22) Date of filing: 03.09.80

(54) Variable capacitance pressure transducer assembly.

(30) Priority: 04.09.79 US 72503

(43) Date of publication of application:
18.03.81 Bulletin 81/11

(45) Publication of the grant of the patent:
24.04.85 Bulletin 85/17

(84) Designated Contracting States:
DE FR GB IT NL

(56) References cited:
EP-A-0 024 945
EP-A-0 024 946
US-A-3 634 727
US-A-3 858 097
US-A-4 084 438

IEEE TRANSACTIONS ON ELECTRON
DEVICES, vol. ED-27, May 1980 no. 5 NEW
YORK (US) C.S. SANDER: "A monolithic
capacitive pressure sensor with pulse-period
output" pages 927-930

(73) Proprietor: FORD MOTOR COMPANY LIMITED
Eagle Way
Brentwood Essex CM13 3BW (GB)
(84) GB

(73) Proprietor: FORD-WERKE
AKTIENGESELLSCHAFT
Ottoplatz 2 Postfach 21 03 69
D-5000 Köln 21 (DE)
(84) DE

(73) Proprietor: FORD FRANCE SOCIETE ANONYME
344 Avenue Napoléon Bonaparte B.P. 307
F-92506 Rueil Malmaison Cedex (FR)
(84) FR

(73) Proprietor: Ford Motor Company
The American Road
Dearborn, MI 48121 (US)
(84) IT NL

(72) Inventor: Giachino, Joseph Mario
34368 Oak Forest Drive
Farmington Hills Michigan 48018 (US)
Inventor: Haeberle, Russell James
43984 Arlington Road
Canton Michigan 48187 (US)
Inventor: Crow, Joseph William
14481 Ellen Drive
Livonia Michigan 48154 (US)

Courier Press, Leamington Spa, England.

EP 0 025 336 B1

**0 025 336**

(74) Representative: **Messulam, Alec Moses et al
A. Messulam & Co. 24 Broadway
Leigh on Sea Essex SS9 1BN (GB)**

# Description

This invention relates to variable capacitance pressure transducer assemblies.

Variable capacitance pressure transducer devices generally comprise at least two spaced conductive plates the spacing between which may be varied in response to fluctuations in fluid pressure acting on at least one of the plates, thereby producing a variation in the capacitance of the assembly.

Such pressure transducer assemblies are particularly suitable for use in measuring absolute pressure, such as that which occurs in the intake manifold of an internal combustion engine where the pressure measurement is required to provide air flow information in relation of metering of fuel to the engine. The pressure transducer also is very satisfactory for use in measurement of barometric pressure.

There is known from US—A—4,084,338 a pressure transducer in which two dielectric discs are fused together at the peripheral boundaries to form a hollow monolithic capsule having two nominally planar opposed inner surfaces. The opposed inner surfaces of the capsule are mutually separated by a uniform gap near the peripheral boundary by a distance related to the difference between the pressure inside and outside the capsule. Conductive films are disposed on opposite portions of the inner surfaces of the capsule and in order to permit electrical coupling to be made to these conductive films the pressure transducer further includes external terminals electrically coupled to the capacitor plates. The terminals are connected to a conductive film on the outer surface of the capsule arranged opposite each inner conductive film.

In most of the embodiments described in the above patent specification, the leads for the opposite plates come from different sides of the capsule which makes for difficult mounting and necessitates wide connections. The above patent also discloses a capsule which is internally divided into two separate compartments of which one is connected to the pressure to be measured and the other constitutes to variable capacitor. Here the leads extend from the same side of the capacitor sensing device but the device is difficult to mount and still requires the soldering of leads onto its external surface.

US—A—3,634,727 describes a pressure transducer having a capsule formed of a pair of single crystal silicon wafers doped to render them conductive and provided with contact terminals on the opposite side of the transducer. This device once again requires wired leads.

The invention seeks to provide a pressure sensing transducer in which the mounting and establishing electrical connections to the plates of a variable capacitor constituted by a hermetically sealed capsule may be considerably simplified.

In accordance with the present invention, there is provided a variable capacitance pressure transducer assembly comprising a hermetically sealed transducer device including at least two spaced conductive plates the spacing between which varies in response to fluctuations in fluid pressure acting on at least one of the plates, the transducer device having conductive bumps on an outer surface which are electrically coupled to the capacitor plates, characterised in that the transducer device is situated entirely within a separately formed enclosure of which the interior is connectable to a fluid pressure to be monitored, the enclosure comprising a substrate of insulating material and a cover, in that conductive strips are formed on the substrate and are in direct contact with the conductive bumps on the transducer device, the conductive strips extending beyond the boundary of the cover, and in that the cover is bonded to the substrate with a closed path seal which crosses the conductive strips on the substrate without making electrical contact therewith.

A preferred embodiment of the invention will now be described, by way of example only, with reference to the accompanying drawings in which:—

Figure 1 is an enlarged plan view, at approximately three times its actual size of a variable capacitance transducer assembly;

Figure 2 is a further enlarged view, approximately six times actual size, of the pressure transducer assembly of Figure 1 and is shown in sectional elevational view, the section being taken along the line II—II in Figure 1; and

Figure 3 is an even further enlarged partial sectional view of the area in circle III of Figure 2.

With particular reference now to the drawings, wherein like numerals refer to like parts in the two figures thereof, there is shown an improved variable capacitance pressure transducer assembly generally designated by the numeral 10.

The pressure transducer assembly 10 comprises three main elements, a dielectric substrate 12, a pressure transducer device 14, and a cover 16 having a tubular extension 18 to which a rubber tube 20 or the like may be affixed for supplying pressure to the region enclosed by the cover 16. The upper surface of the pressure transducer device 14 is subjected to fluid pressures within the cover 16 and deflects upwardly or downwardly in response to such pressure fluctuations to vary the capacitance between two plates of a capacitor that are an integral part of the pressure transducer device 14.

The substrate 12 preferably is made of an alumina ceramic or other electrical insulating material. Alumina is a material commonly used in electronic thick-film technology and is commercially available in various sizes. Silicon or other semiconductor material may be used as the substrate 12 if desired and integrated circuit technology may be employed therewith in the use of the pressure transducer signal. If instead thick film technology is used, the substrate 12 may be made of beryllia, a considerably more expensive material than alumina but satisfactory for this application if desired. The pressure transducer device 14 preferably is constructed in accordance with our copending European Patent Application No. 80303057.6 (publication number EP—A— 0 024 945).

The present device, however, does include a semiconductor material 26 that is heavily doped and forms one plate of a capacitor in the transducer device. The semiconductor material 26 is bonded, preferably anodically, to a glass or other insulating material 28 on which a thin film 32 of electrically conductive material has been deposited to form a second plate of the pressure transducer capacitor. The spacing between the semiconductor material 26 and the thin film of conductive material 32 varies as a function of fluctuations of fluid pressure to which the semiconductor material is exposed on its exterior surface within the cover 16. The nominal fluid pressure within the recessed volume 30 of the pressure transducer device 14 may be maintained at a constant level as a result of the establishment therein of vacuum or other predetermined pressure during manufacture of the transducer device 14.

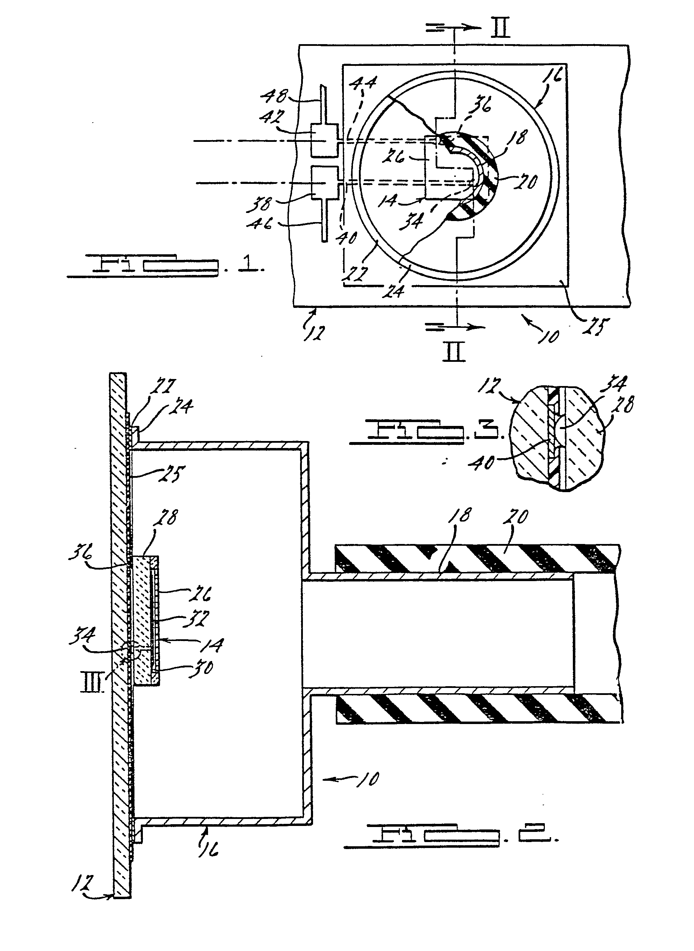

The transducer device 14 has solder bumps 34 and 36 that are electrically connected, respectively, to the thin film capacitor plate 32 and the semiconductive material 26 capacitor plate. Additional solder bumps may be provided for mechanical stability of the transducer device 14, which is both electrically and mechanically connected to the substrate 12. The substrate 12 has conductive strips 40 and 44, as may best be seen in Figure 1, to which the solder bumps 34 and 36, respectively, are electrically connected.

The conductive strips 40 and 44 provide electrical connection to the capacitor plates through the solder bumps and the internal conductive paths within the pressure transducer device 14. These conductive strips 40 and 44 extend out of the flange perimeter 24 of the cover 16 where they connect with conductive pads 38 and 42, respectively. These pads 38 and 42 have respective electrically conductive leads 46 and 48 that may connect to external circuitry remote from the substrate 12 or to thick film and other electronic components that may be located on the substrate 12 using known thick film electrical technology. The capacitive pressure transducer of the invention may have electrical capacitance variations that can be used to control the output frequency or voltage of an oscillator and/or other electronic circuitry intended to indicate pressure in response to the capacitance fluctuations.

The flange or perimeter 24 of the cover 16 is bonded to the substrate, via an intermediate bonding material 22, in a manner that prohibits entry of fluids into the volume enclosed by the cover 16 and the substrate 12 via this flange area 24. Thus, as a result of this closed-path seal, fluid pressure within the cover 16 is established through the tube extension 18, which may be connected for example to the intake manifold of an internal combustion engine. This fluid pressure to be measured applied to the external area of the pressure transducer device 14, thereby, to allow any pressure variations of the pressure being sensed to produce deflection of the transducer area and consequential variation of its electrical capacitance. The flange 24 and the intermediate bonding material 22 do not make electrical contact with the conductive strips 40 and 44 which pass thereunder. An oxide 25 or other electrical insulating material may be used to separate the conductive strips 40 and 44 from the flange 24 and the intermediate bonding material 22 if necessary. Of course, the bonding material 22 may be non-conductive and may be a resinous material. Solder also could be used.

## Claims

1. A variable capacitance pressure transducer assembly (10) comprising a hermetically sealed transducer device (14) including at least two spaced conductive plates (26, 32) the spacing (30) between which varies in response to fluctuations in fluid pressure acting on at least one (26) of the plates (26, 32), the transducer device (14) having conductive bumps (36, 34) on an outer surface which are electrically coupled to the capacitor plates (26, 32), characterised in that the transducer device (14) is situated entirely within a separately formed enclosure of which the interior is connectable to a fluid pressure to be monitored, the enclosure comprising a substrate (12) of insulating material and a cover (16), in that conductive strips (40, 44) are formed on the substrate (12) and are in direct contact with the conductive bumps (36, 34) on the transducer device, the conductive strips (40, 44) extending beyond the boundary of the cover (16), and in that the cover (16) is bonded to the substrate with a closed path seal which crosses the conductive strips (40, 44) on the substrate (12) without making electrical contact therewith.

2. A transducer assembly as claimed in Claim 1, in which the substrate (12) is of ceramic material.

3. A transducer assembly as claimed in Claim 1 or Claim 2, wherein the substrate (12) has additional conductive paths (46, 48) connected to the parts of the conductive strips (40, 44) extending beyond the cover (16).

## Patentansprüche

1. Druckwandlerbaugruppe (10) mit veränderlicher Kapazität, mit einer hermetisch abgeschlossenen Wandervorrichtung (14), die mindestens zwei voneinander getrennte leitfähige Platten (26, 32) enthält, deren Zwischenraum 30 sich als Reaktion auf Schwankungen in dem auf mindestens eine (26) der Platten (26, 32) einwirkenden Flüssigkeitsdruck ändert, wobei die Wandlervorrichtung (14) auf einer Aussenfläche mit leitfähigen Ausbeulungen (36, 34) versehen ist, die galvanisch mit den Kondensatorplatten (26, 32) verkoppelt sind, dadurch gekennzeichnet, dass die Wandlervorrichtung vollständig innerhalb eines getrennt ausgebildeten Gehäuses liegt, dessen Inneres an einen zu überwachenden Flüssigkeitsdruck anschliessbar ist, wobei das Gehäuse ein Substrat (12) aus Isolierstoff und einen Deckel (16) umfasst, dass auf dem Substrat (12) leitfähige Streifen (40, 44) ausgebildet werden und in direktem Kontakt mit den leitfähigen Ausbeulungen (36, 34) auf der Wandlervorrichtung stehen, wobei sich die leitfähigen Streifen (40, 44) über die Grenze des Deckels (16) hinaus erstrecken, und dass der Deckel (16) mit einer, einen geschlossenen Pfad bildenden Dichtung, die die leitfähigen Streifen (40, 44) auf dem Substrat (12) überquert, ohne sie galvanisch zu kontaktieren, an das Substrat gebunden ist.

2. Druckwandlerbaugruppe nach Anspruch 1, dadurch gekennzeichnet, dass das Substrat (12) aus keramischem Werkstoff besteht.

3. Druckwandlerbaugruppe nach Anspruch 1 oder 2, dadurch gekennzeichnet, dass das Substrat (12) zusätzliche leitfähige Pfade (46, 48) umfasst, die mit den sich über den Deckel (16) hinaus erstreckenden Teilen der leitfähigen Streifen (40, 44) verbunden sind.

**Revendications**

1. Ensemble (10) de transducteur de pression à capacité variable comportant un dispositif transducteur (14) enfermé hermétiquement comprenant au moins deux plaques conductrices espacées (26, 32) dont l'écartement (30) varie en réponse à des fluctuations de pression fluidique s'exerçant sur l'une au moins (26) des plaques (26, 32), le dispositif transducteur (14) comprenant des bossages conducteurs (36, 34) sur une surface extérieure, qui sont couplés électriquement avec les plaques de condensateur (26, 32), caractérisé en ce que le dispositif transducteur (14) est situé entièrement dans une enceinte formée séparément dont l'intérieur peut être relié à une pression fluidique à contrôler, l'enceinte comprenant un substrat (12) de matière isolante et un couvercle (16), en ce que des rubans conducteurs (40, 44) sont formés sur le substrat (12) et sont en contact direct avec les bossages conducteurs (36, 34) sur le dispositif transducteur, les rubans conducteurs (40, 44) se prolongeant au-delà de la limite du couvercle (16) et en ce que le couvercle (16) est fixé sur le substrat avec un joint en circuit fermé qui croise les rubans conducteurs (40, 44) sur le substrat (12) sans être en contact électrique avec eux.

2. Ensemble transducteur selon la revendication 1, dans lequel le substrat (12) est en une matière céramique.

3. Ensemble transducteur selon la revendication 1 ou la revendication 2, dans lequel le substrat (12) comporte des circuits conducteurs supplémentaires (46, 48) connectés aux parties des rubans conducteurs (40, 44) se prolongeant au-delà du couvercle (16).

FIG. 1.

FIG. 3.

FIG. 2.